**Europäisches Patentamt**

**European Patent Office**

**Office européen des brevets**

(19)

(11) Veröffentlichungsnummer: **0 116 888**

**B1**

(12) # EUROPÄISCHE PATENTSCHRIFT

(45) Veröffentlichungstag der Patentschrift:
14.01.87

(21) Anmeldenummer: **84101189.3**

(22) Anmeldetag: **06.02.84**

(51) Int. Cl.⁴: **C 23 C 8/12,** G 21 C 3/06,
G 21 C 21/02

(54) Verfahren zum Oberflächenbehandeln von Fertigteilen, insbesondere von Rohren und Abstandshaltern aus Zirkoniumlegierungen für Kernreaktorbrennelemente.

(30) Priorität: **18.02.83 DE 3305730**

(43) Veröffentlichungstag der Anmeldung:
**29.06.84 Patentblatt 84/35**

(45) Bekanntmachung des Hinweises auf die Patenterteilung:
**14.01.87 Patentblatt 87/3**

(84) Benannte Vertragsstaaten:
**BE DE FR GB IT SE**

(56) Entgegenhaltungen:
**DE-A-2 429 447**
**DE-A-2 833 396**
**DE-C-2 737 532**
**GB-A-870 170**
**GB-A-1 168 371**

**PATENT ABSTRACTS OF JAPAN, unexamined
applications, C Field, Vol. 4, No. 65, 16. Mai 1980,
THE PATENT OFFICE JAPANESE GOVERNMENT,
Seite 30 C 10**

(73) Patentinhaber: **KRAFTWERK UNION
AKTIENGESELLSCHAFT, Wiesenstrasse 35, D-4330
Mülheim (Ruhr) (DE)**

(72) Erfinder: **Steinberg, Eckard, Dipl.- Ing., Mistelweg
8, D-8520 Erlangen (DE)**

(74) Vertreter: **Mehl, Ernst, Dipl.- Ing., Postfach 22 01
76, D-8000 München 22 (DE)**

## Beschreibung

Die Erfindung betrifft ein Verfahren zum Oberflächenbehandeln von Fertigteilen, insbesondere von Rohren und Abstandshaltern, aus Zirkoniumlegierungen für Kernreaktorbrennelemente mit einem Oxidationsmittel.

Ein derartiges Verfahren ist aus Seite 158 aus "Nuclear Engineering and Design" 33 (1973), North-Holland Publishing Company, bekannt. Nach diesem bekannten Verfahren werden Hüllrohre für Kernreaktorbrennstoff, die aus einer mit Zircaloy bezeichneten Zirkoniumlegierung bestehen, nach einer Beizbehandlung 3 Tage lang bei 300° C bis 400° C einem aus Wasser oder Wasserdampf bestehenden Oxidationsmittel ausgesetzt, um anschließend anhand der gebildeten Oberflächenschicht aus Oxid die Hüllrohroberfläche auf Störstellen und Beizrückstände zu untersuchen.

Der Erfindung liegt die Aufgabe zugrunde, dieses Verfahren weiterzubilden und örtliche starke Korrosionen (Nodularkorrosionen) an Oberflächen von Fertigteilen wie Hüllrohren aus Zirkoniumlegierungen für Kernreaktorbrennelemente zu vermeiden, die beispielsweise an der Außenoberfläche von Hüllrohren auftreten können, wenn diese Hüllrohre einmal mit Kernbrennstoff gefüllt und mit ihrer Außenoberfläche in einem Kernreaktor überhitztem Wasser oder Wasserdampf ausgesetzt sind. Nodularkorrosion kann zum Perforieren der Fertigteile aus Zirkoniumlegierung z.B. Hüllrohre, in einem Kernreaktor führen.

Zur Lösung dieser Aufgabe ist ein Verfahren der eingangs erwähnten Art erfindungsgemäß dadurch gekennzeichnet, daß die Fertigteile in einem Autoklaven auf eine solche Temperatur erhitzt und einem solchen Oxidationsmittel ausgesetzt werden, daß Sauerstoff in atomarer Form entsteht und daß sich hierdurch zumindest auf dem Oberflächenteil der Fertigteile, die in einem Kernreaktor Wasser oder Wasserdampf ausgesetzt sind, eine weitestgehend wasserstoffundurchlässige Oberflächenschicht aus Oxid bildet.

Durch diese Oberflächenschicht aus Oxid wird zwar nicht eine Weiteroxidation der Zirkoniumlegierung in überhitztem Wasser oder Wasserdampf im Kernreaktor verhindert, wohl aber wird vermieden, daß Wasserstoff in die Matrix der Zirkoniumlegierung eindringen und diese örtlich hydrieren kann, wodurch die Oxidschicht an der Oberfläche der Fertigteile perforiert werden würde, so daß dort überhitztes Wasser oder Wasserdampf im Kernreaktor unmittelbar mit der Zirkoniumlegierung unter Ausbildung von Korrosionspusteln (Nodularkorrosion) reagieren kann.

Von Vorteil ist es, wenn die Fertigteile im Autoklaven so lange erhitzt werden, bis auf ihnen eine Oberflächenschicht von einer solchen Dicke oxidiert ist, daß in dieser Oberflächenschicht befindliche Sekundärausscheidungen vollständig von Oxid umgeben sind. Diese Sekundärausscheidungen sind ungelöste Legierungsbestandteile in der Matrix der Zirkoniumlegierung, die die technologischen Eigenschaften der Legierung wie z.B. ihre Härte und Festigkeit verbessern und die ein anderes Korrosionsverhalten als die Natrix der Zirkoniumlegierung zeigen und deshalb Fenster in der wasserstoffundurchlässigen Oberflächenschicht aus Oxid bilden können. Durch solche Fenster hindurch würde ebenfalls überhitztes Wasser oder Wasserdampf in einem Kernreaktor unmittelbar mit der Zirkoniumlegierung reagieren und Nodularkorrosion auslösen. Sind diese Sekundärausscheidungen vollständig von wasserstoffundurchlässigem Oxid umgeben, wird eine solche Fensterbildung vermieden.

Von Vorteil ist es, wenn als Oxidationsmittel Wasserstoffperoxid $H_2O_2$ verwendet wird.

Aus der deutschen Patentschrift 27 37 332 ist es zwar bekannt, an der Innenseite von Hüllrohren für Brennstäbe von Kernreaktorbrennelementen, die aus einer Zirkoniumlegierung bestehen, eine Oberflächenschicht aus Oxid zu erzeugen, indem $H_2O_2$ in an beiden Enden verschlossenen und gedehnten bzw. geblähten Hüllrohren verdampft wird. Diese Oberflächenschicht aus Oxid wird jedoch nicht an der Außenoberfläche der Hüllrohre erzeugt, die in einem Kernreaktor Wasser oder Wasserdampf ausgesetzt ist, sondern an der Innenoberfläche, die weder Wasser noch Wasserdampf ausgesetzt ist. Dementsprechend verhindert diese Oxidschicht auf der Innenseite der Hüllrohre auch keine durch überhitztes Wasser oder Wasserdampf in einem Kernreaktor hervorgerufene Nodularkorrosionen, sondern Spannungsrißkorrosionen durch Kernspaltprodukte.

Die Erfindung und ihre Vorteile seien anhand von Ausführungsbeispielen näher erläutert:

Ein Hüllrohr aus einer mit Zircaloy 2 bezeichneten Zirkoniumlegierung, die 1,2 - 1,7 Gew. % Zinn, 0,07 - 0,2 Gew. % Eisen, 0,03 - 0,13 Gew. % Chrom, 0,03 - 0,08 Gew. % Nickel, 0,07 - 0,13 Gew. % Sauerstoff und den Rest Zirkonium enthält, wird als erstes Ausführungsbeispiel in einem Autoklaven in Wasserdampf bei 400° C drei Tage lang an der Außenseite oxidiert. Es ergibt sich eine Oberflächenschicht aus Oxid von 1 - 2 µm Dicke. Dieses Hüllrohr wird anschließend in einem anderen Autoklaven, der die Bedingungen in einem Kernreaktor simuliert, Wasserdampf bei 300° C und bei einem Druck von 123 bar 24 Stunden lang ausgesetzt. Die Gewichtszunahme des Rohres beträgt nach dieser Zeit 1200 mg pro dm² Außenoberfläche. Ferner bilden sich an der Außenoberfläche zahlreiche Korrosionspusteln.

Ein Hüllrohr aus der gleichen Zirkoniumlegierung wird sodann als zweites Ausführungsbeispiel in einem Autoklaven, der 40 %iges Wasserstoffperoxid $H_2O_2$ enthält, 72 Stunden lang auf 400° C erhitzt. An der Außenoberfläche des Hüllrohres wird eine Oberflächenschicht von 1 bis 3 μm Dicke oxidiert. Dieses Hüllrohr wird sodann in einem anderen Autoklaven, in dem die Bedingungen in einem Kernreaktor simuliert werden, den gleichen Testbedingungen wie beim ersten Ausführungsbeispiel unterworfen. Es ergibt sich eine Gewichtszunahme des Rohres von nur 30 mg pro dm² Außenoberfläche. Die Obarflächenschicht aus Oxid ist schattierungsfrei schwarz und frei von Korrosionspusteln (keine Nodularkorrosion).

Es ist günstig, wenn die Fertigteile aus Zirkoniumlegierungen und das Wasserstoffperoxid $H_2O_2$ im Autoklaven auf eine Temperatur im Bereich von 400°C bis 550°C erhitzt werden. Ferner kann als Oxidationsmittel anstelle von Wasserstoffperoxid $H_2O_2$ günstigerweise z.B. Ozon im Autoklaven verwendet werden.

**Patentansprüche**

1. Verfahren zum Oberflächenbehandeln von Fertigteilen, insbesondere von Rohren und Abstandshaltern, aus Zirkoniumlegierungen für Kernreaktorbrennelemente mit einem Oxidationsmittel, dadurch gekennzeichnet, daß die Fertigteile in einem Autoklaven auf eine solche Temperatur erhitzt und einem solchen Oxidationsmittel ausgesetzt werden, daß Sauerstoff in atomarer Form entsteht und daß sich zumindest auf den Oberflächenteilen der Fertigteile, die in einem Kernreaktor Wasser oder Wasserdampf ausgesetzt sind, eine weitestgehend wasserstoffundurchlässige Oberflächenschicht aus Oxid ausbildet.

2. Verfahren nach Anspruch 1, dadurch gekennzeichnet, daß die Fertigteile im Autoklaven so lange erhitzt werden, bis auf ihnen eine Oberflächenschicht von einer solchen Dicke oxidiert ist, daß in dieser Oberflächenschicht befindliche Sekundärausscheidungen vollständig von Oxid umgeben sind.

3. Verfahren nach Anspruch 2, dadurch gekennzeichnet, daß eine Oberflächenschicht von 1 - 3 μm Dicke oxidiert wird.

4. Verfahren nach Anspruch 1, dadurch gekennzeichnet, daß als Oxidationsmittel Wasserstoffperoxid $H_2O_2$ verwendet wird.

5. Verfahren nach Anspruch 4, dadurch gekennzeichnet, daß die Fertigteile und das $H_2O_2$ im Autoklaven auf eine Temperatur im Bereich von 400°C bis 550°C erhitzt werden.

6. Verfahren nach Anspruch 1, dadurch gekennzeichnet, daß als Oxidationsmittel Ozon verwendet wird.

**Revendications**

1. Procédé de traitement par un agent oxydant de pièces préfabriquées, notamment de tubes et d'entretoises en alliages de zirconium, destinées à des assemblages combustibles de réacteur nucléaire, caractérisé en ce qu'il consiste à chauffer les pièces préfabriquées dans un autoclave à une température telle et à les soumettre à un agent oxydant tel qu'il se produise de l'oxygène sous forme atomique, et qu'il se forme ainsi, au moins sur les parties superficielles des pièces préfabriquées, qui sont exposées dans un réacteur nucléaire à de l'eau ou à de la vapeur d'eau, une couche superficielle d'oxyde qui, dans une grande mesure, est imperméable à l'hydrogène.

2. Procédé suivant la revendication 1, caractérisé en ce qu'il consiste à chauffer les pièces préfabriquées à l'autoclave jusqu'à oxydation d'une couche superficielle d'une épaisseur telle que des dépôts secondaires se trouvant dans cette couche superficielle soient entièrement entourés d'oxyde.

3. Procédé suivant la revendication 2, caractérisé en ce qu'il consiste à oxyder une couche superficielle de 1 à 3 microns d'épaisseur.

4. Procédé suivant la revendication 1, caractérisé en ce qu'il consiste à utilisericomme agent oxydant, de l'eau oxygénée $H_2O_2$.

5. Procédé suivant la revendication 4, caractérisé en ce qu'il consiste à chauffer les pièces préfabriquées et l'$H_2O_2$ à l'autoclave jusqu'à une température de l'ordre de 400°C à 550°C.

6. Procédé suivant la revendication 1, caractérisé en ce qu'il consiste à utiliser de l'ozone comme agent oxydant.

**Claims**

1. A process for the surface treatment with an oxidising agent of finished parts, made of zirconium alloys for nuclear reactor fuel elements, particularly but not exclusively of tubes and spacers, characterised in that the finished parts are heated in an autoclave to such a temperature and are subjected to such an oxidising agent that oxygen is produced in atomic form; and that a surface which consists of oxide and is largely impermeable to hydrogen is consequently formed, at least on the surfaces of the finished parts, which are subjected to water or steam in a nuclear reactor.

2. A process as claimed in Claim 1, characterised in that the finished parts are heated in the autoclave until a surface layer is oxidized thereon of a thickness such that secondary deposits present in said surface layer are completely surrounded by oxide.

3. A process as claimed in Claim 2, characterised in that a surface layer having a thickness of 1 - 3 μm is oxidized.

4. A process as claimed in Claim 1, characterised in that hydrogen peroxide $H_2O_2$ is used as oxidising agent.

5. A process as claimed in Claim 4, characterised in that the finished parts and the $H_2O_2$ are heated in the autoclave to a temperature in the range of 400°C to 550°C.

6. A process as claimed in Claim 1, characterised in that ozone is used as oxidising agent.